Europäisches Patentamt

European Patent Office

Office européen des brevets

(11) Veröffentlichungsnummer: **0 190 175**
**B1**

(12) **EUROPÄISCHE PATENTSCHRIFT**

(45) Veröffentlichungstag der Patentschrift: **16.05.90**

(51) Int. Cl.⁵: **A 22 C 29/00, A 22 C 25/02**

(21) Anmeldenummer: **85903222.9**

(22) Anmeldetag: **05.07.85**

(86) Internationale Anmeldenummer:
**PCT/DE85/00232**

(87) Internationale Veröffentlichungsnummer:
**WO 86/00500 30.01.86 Gazette 86/03**

(54) **VORRICHTUNG ZUM REINIGEN VON SCHALENTIEREN.**

(30) Priorität: **13.07.84 DE 3425884**
**11.01.85 DE 3500787**

(43) Veröffentlichungstag der Anmeldung:
**13.08.86 Patentblatt 86/33**

(45) Bekanntmachung des Hinweises auf die
Patenterteilung:
**16.05.90 Patentblatt 90/20**

(84) Benannte Vertragsstaaten:
**AT BE CH FR GB IT LI LU NL SE**

(56) Entgegenhaltungen:
**CH-A- 597 763**
**DE-A-2 905 595**
**FR-A-1 170 867**
**FR-A-1 580 835**
**GB-A- 554 011**
**GB-A- 598 764**
**US-A-3 860 371**

(73) Patentinhaber: **RITZER, Josef**
**Heuberweg 5**
**D-8203 Oberaudorf (DE)**

(72) Erfinder: **RITZER, Josef**
**Heubergweg 5**
**D-8203 Oberaudorf (DE)**
Erfinder: **BRUNNER, Josef**
**A-6322 Niederbreitenbach 156 (AT)**

Courier Press, Leamington Spa, England.

**Beschreibung**

Die Erfindung betrifft eine Vorrichtung zum Reinigen von Schalentieren, gemäß dem Oberbegriff des Anspruchs 1. Solche Schalentiere sind etwa Miesmuscheln, Austern und/oder Jakobsmuscheln.

Schalentiere der genannten Art sind bei ihrer Gewinnung, Erzeugung oder Ernte außen mit Ansiedlungen und Ablagerungen niederer Lebewesen, wie Algen und anderer Aufsitzer, organischer Stoffe, wie Schlamm oder Schlick sowie mineralischer Stoffe, wie Kalk und sonstiger Krusten behaftet. Sie müssen daher vor ihrer Weiterbearbeitung zum Verzehr bzw. vor dem Verzehr gereinigt werden.

Die Reinigung geschieht bisher herkömmlich durch Abbürsten und Abkratzen von Hand. Diese Arbeit ist sehr zeitraubend und somit sehr kostenaufwendig. Wegen des hohen Zeitaufwandes und der hohen Kosten wurde mehr und mehr, insbesondere im Gastgewerbe, auf das Anbieten solcher Schalentiere verzichtet.

Es ist zwar bereits eine Vorrichtung der eingangs genannten Art bekannt (FR—A—1 580 835), welche eine mit einer Spülflüssigkeit flutbare Kammer aufweist. Am Boden dieser Kammer sind feststehende, starre oder halbstarre, verhältnismäßig lange Zinken angebracht, die in einen in der Kammer angeordneten Korb hineinragen. Dieser Korb ist nach oben offen. Von oben her ragt in den Korb eine drehbare Scheibe, die ebensolche Zinken wie der Boden aufweist.

Beim Betrieb werden frisch geerntete, in Büscheln zusammenhängende Schalentiere in den Korb gelegt und dieser wird in die Vorrichtung eingebracht. Dann wird die obere Scheibe abgesenkt, bis sie auf den Muscheln aufsitzt. Hierbei dringen die Zinken der Vorrichtung tief in die Muscheln ein und gelangen mit diesen in formschlüssigen Eingriff. Die obere Scheibe wird dann in Drehung versetzt, während gleichzeitig die Kammer mit Spülflüssigkeit geflutet ist. Hierbei werden die zu Büscheln zusammenhängenden Muscheln gewaltsam auseinandergerissen.

Dieser Betrieb darf aber nur mit verhältnismäßig niedriger Drehzahl und nur über eine kurze Zeitdauer hinweg erfolgen, denn da die Zinken hinlänglich starr sein müssen, um die zum Auseinanderreißem der Büschel erforderliche Kraft in die Muscheln einzuleiten, würde ein Betrieb bei höherer Drehzahl oder ein längerdauernder Betrieb unweigerlich die Muscheln stark schädigen, so daß ihre Lebensdauer stark verkürzt wäre. Die Reinigungswirkung der bekannten Vorrichtung ist daher gering und beschränkt sich auf das Entfernen von Tangresten und ähnlichen, groben Verunreinigungen.

Die Schalentiere, die eingangs erwähnt wurden und die im Handel angeboten werden, sind genau jene noch reinigungsbedürftigen Schalentiere, die bereits in einer Vorrichtung der bekannten Art vorbehandelt wurden.

Der Erfindung liegt daher die Aufgabe zugrunde, die bekannte Vorrichtung dahingehend weiterzubilden, daß sie nicht zum Auseinanderreißen von Schalentier-Büscheln und zum Vorreinigen der Schalentiere, sondern zum sauberen und schonenden Fertigreinigen der bereits vorher vereinzelten Schalentiere eingerichtet ist.

Diese Aufgabe wird durch die Merkmale des Anspruchs 1 gelöst.

Hierbei sind die Eingriffselemente der Vorrichtung, die mit den Schalentieren in Berührung kommen, so ausgebildet, daß sie deren intensive Reinigung bewirken, wobei durch die Wirkung der Borsten auch bei Muscheln die sogenannten Bärte entfernt werden, was bisher in jedem Fall von Hand geschehen mußte.

Außerdem weist die erfindungsgemäße Vorrichtung eine Aufgabe- und Ausgabeöffnung für die Spülflüssigkeit auf, so daß die Schalentiere im Durchlauf gespült werden können und somit die Spülflüssigkeit nicht mit allen gelösten Verunreinigungen in der Vorrichtung verbleibt, wie dies bei der gattungsbildenden Vorrichtung der Fall ist; alle Verunreinigungen werden, unmittelbar nachdem sie freigesetzt wurden, aus der Vorrichtung herausgespült und können somit nicht zur weiteren Verschmutzung oder Beschädigung der Schalentiere beitragen.

Es ist zwar bekannt (US—A—2 860 371), bei einer Vorrichtung zum Entschuppen von Fischen, die eine Kammer und einen aufgerauhten Rotor aufweist, diese Kammer ständig zu spülen, aber die Spülungswirkung dient nur zum ständigen Entfernen von Schuppen und Schleim, unterstützt aber nicht den eigentlichen Entschuppungsvorgang.

Bei der erfindungsgemäßen Vorrichtung haben auch die Eingriffselemente bzw. Borsten selbst eine reinigende Wirkung, wenn sie über die Muscheln scheuern, im Gegensatz zu den Eingriffselementen der gattungsbildenden Vorrichtung, die ausschließlich zum Auseinanderreißen der Muscheln dienen.

Bevorzugte und vorteilhafte Weiterbildungen der Erfindung sind den weiteren Ansprüchen entnehmbar.

In der Zeichnung ist das Wesen der Erfindung anhand von Ausführungsbeispielen in schematischer Weise veranschaulicht. Es zeigen:

Fig. 1 eine Vorrichtung zum Reinigen von Schalentieren, in der Seitenansicht im Schnitt,

Fig. 2 die untere Bürstenscheibe der Vorrichtung in der Draufsicht, und

Fig. 3 eine andere Vorrichtung zum Reinigen von Schalentieren, in perspektivischer Ansicht.

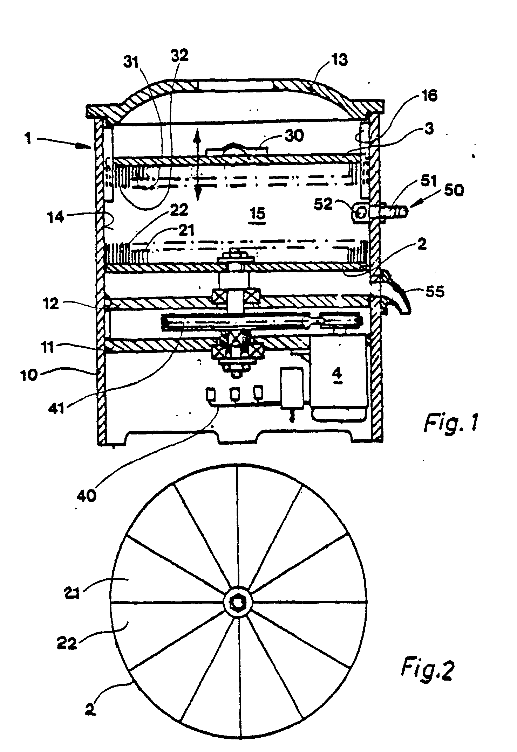

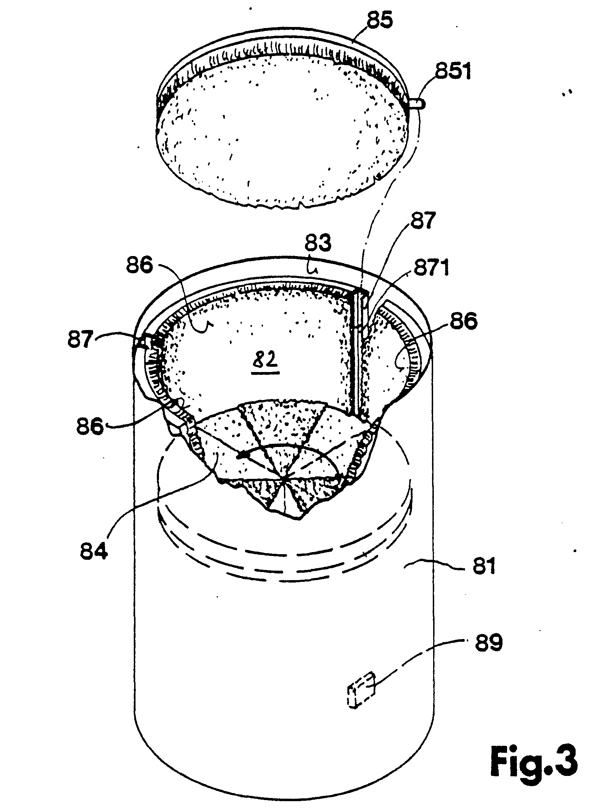

Nach Fig. 1 bzw. 2 besteht eine Vorrichtung zum Reinigen von Schalentieren aus einem trommelförmigen Gehäuse 1 mit einem hohlkreiszylinderförmigen Mantel 10, zwei Böden 11 und 12 sowie einem abnehmbaren Deckel 13, wesentlich jedoch aus einer Kammer 15 zur Aufnahme einer Menge Schalentiere, wobei zwei einander gegenüberliegende Wände der Kammer 15 in, in ihren Ebenen relativ zueinander beweglichen Bürstenscheiben 2 und 3, die als Rotationskörper ausgebildet sind bestehen, und die Kammer 15 seitlich, mit Spiel zu den Bürstenscheiben 2 und 3 von einem hohlkreiszylindrischen Mantel in Form der Innenwand 14 des Gehäuses 1 umschlossen ist. Die untere Bürstenscheibe 2 ist von einem Antriebsmotor 4, mit Schaltelementen 40, über einen Keilriementrieb 41 angetrieben. Die obere Bürstenscheibe 3 ist in Führungsschienen 16 in axialer Richtung — Pfeil — vertikal gleitbar geführt und nach oben mittels ihres Handgriffs 30 aus dem Gehäuse 1 herausnehmbar. Weiter sind an der Vorrichtung eine Aufgabeöffnung 50 mit einem Anschlußnippel 51 und einer Strahldüse 52 und eine Ausgabeöffnung 55 für die Spülflüssigkeit, eben reines Wasser vorgesehen.

Auf den Bürstenscheiben 2 und 3 sind Abschnitte unterschiedlicher Borstenlänge angeordnet, wobei die Anschnitte 21, 31 mit kurzen Borsten und die Abschnitte 22, 32 mit dazu relativ langen Borsten in Bewegungs- bzw. in Drehrichtung abwechselnd — Fig. 2 —, sektorförmig ausgebildet und angeordnet sind.

Zum Reinigen der Schalentiere werden eine Menge davon in die Kammer 15 gegeben, die Spülung und der Antriebmotor 4 in Gang gesetzt. Die Bürstenscheibe 3 liegt mit ihrem Eigengewicht auf den Schalentieren. Diese werden nun zufolge der Relativbewegung der Bürstenscheiben 2 und 3 bei lebhaftem Umwälzen abgebürstet, bei Muscheln die Bärte entfernt.

Nach Fig. 3 befindet sich in einem trommelförmigen Gehäuse 81 eine kreishohlzylinderförmige Kammer 82, auch Reinigungskammer zu nennen, die neben ihrer zylindrischen Trommelinnenwand 83 durch eine Bürstenscheibe 84 und eine Bürstenscheibe 85 — abgehoben dargestellt — umschlossen bzw. umschließbar ist.

Die Trommelinnenwand 83 ist mit Borsten bestückt und zwar in Form eines hohlzylinderförmigen Einsatzes, wobei dieser in hohlzylinderausschnittförmige Einsatzabschnitte 86 unterteilt ist, die mit den Borsten besetzt und mittels an der Trommelinnenwand 83 angeordneter Rippen 87 in Umfangrichtung gehalten sind. In den Rippen 87 sind Führungsnuten 871 für eine an der Bürstenscheibe 85 angebrachte Drehsicherung 851 angeordnet.

Im unteren Bereich der Vorrichtung befinden sich — nur teilweise dargestellt — ein Antriebmotor für die Bürstenscheibe 84 die erforderlichen Schaltelemente, dabei ein Intervallschalter 89 zum wechselnden Betrieb in beiden Drehrichtungen, nämlich des Antriebsmotors und damit der Bürstenscheibe 84.

Die Einsatzabschnitte 86 sind von oben zwischen den Rippen 87 eingeschoben. Sie sind daher einfach nach oben hinauszuschieben, um sie besser reinigen oder ggf. austauschen zu können.

Als Spülflüssigkeit versteht sich ein sauberes Wasser, wie Leitungs- also Süßwasser oder auch Meer- also Salzwasser, das in nicht weiter dargestellter Weise durch die Kammer 82 geleitet wird, wobei die Aufgabeöffnung als Düse in einer Rippe 87, in deren unterem Teil, angebracht sein kann. In der Bürstenscheibe 84 kann das Borstenfeld, ähnlich den Einsatzabschnitten 86, hier sektorförmig aus Abschnitten mit entsprechenden Halterungen zusammengesetzt sein.

Es versteht sich, daß innerhalb des Erfindungsgedankens vielerlei Ausbildungen und Ausführungsformen der Vorrichtung möglich sind. Bei dem korrosionsbeständigen Werkstoff der Borsten kann es sich um rostfreien Stahldraht, geraden Messingdraht oder auch um Kunststoff, wie Polyamid, handeln, wobei die Verwendung von Naturborsten nicht ausgeschlossen ist.

**Patentansprüche**

1. Vorrichtung zum Reinigen von Schalentieren, mit einer Kammer (15) zur Aufnahme einer gewissen Menge von mit einer Spülflüssigkeit zu benetzenden Schalentieren, welche Kammer eine untere Wand (2) und eine obere Scheibe (3) aufweist, die etwa einander gegenüberliegend angeordnet, jeweils mit in die Schalentiere eingreifenden Eingriffselementen besetzt und in ihren Ebenen aufeinander zu beweglich sind, wobei wenigstens die obere Scheibe (3) über einen Antriebsmotor (4) rotierend angetrieben ist, so daß zwischen unterer Wand und oberer Scheibe eine Relativbewegung entsteht, dadurch gekennzeichnet, daß die untere Wand als untere, mit Spiel zur Umfangswand der Kammer gelagerte Scheibe ausgebildet ist, daß die Eingriffselemente als eine Vielzahl von in etwa gleichmäßig über den Scheibenquerschnitt verteilten Borsten (21, 22) ausgebildet sind, so daß sie mit jeder Scheibe eine Bürstenscheibe bilden, oder daß die eine Scheibe als derartige Bürstenscheibe und die Eingriffselemente der anderen Scheibe als Gummifinger, nachgiebige Finger und/oder nachgiebige Schaufeln ausgebildet sind, und daß in der Kammerumfangswandung eine Aufgabe- (50) und Ausgabeöffnung (55) für die Spülflüssigkeit angeordnet sind, wobei die Ausgabeöffnung unterhalb der unteren Scheibe bzw. Bürstenscheibe (2) vorgesehen ist.

2. Vorrichtung nach Anspruch 1, dadurch gekennzeichnet, daß statt der oberen Bürstenscheibe (3) die untere Bürstenscheibe (2) angetrieben ist, oder daß beide Bürstenscheiben gleichzeitig mit unterschiedlicher Drehzahl angetrieben sind.

3. Vorrichtung nach einem der Ansprüche 1 oder 2, dadurch gekennzeichnet, daß eine (3) der Bürstenscheiben vertikal frei beweglich ist und durch ihr Eigengewicht in Richtung auf die andere Bürstenscheibe (2) belastet oder mit Druck beaufschlagt ist.

4. Vorrichtung nach einem der Ansprüche 1 bis 3, dadurch gekennzeichnet, daß auf mindestens einer der Bürstenscheiben (2, 3) abwechselnd Abschnitte (21, 31; 22, 32) mit Borsten unterschiedlicher Länge angeordnet sind.

5. Vorrichtung nach Anspruch 4, dadurch gekennzeichnet, daß die Länge der kurzen Borsten 1 bis 2 cm beträgt und die Länge der langen Borsten die Länge der kurzen Borsten um etwa 1 cm übersteigt.

6. Vorrichtung nach einem der Ansprüche 4 oder 5, dadurch gekennzeichnet, daß die Abschnitte mit kurzen Borsten (21) und die Abschnitte mit langen Borsten (22) sektorförmig ausgebildet und angeordnet sind.

7. Vorrichtung nach einem der Ansprüche 4 bis 6, dadurch gekennzeichnet, daß mindestens eine der Bürstenscheiben (2, 3) an ihrem Umfang einen kranzförmigen Abschnitt mit gegenüber den anderen Borsten noch längeren Borsten aufweist.

8. Vorrichtung nach einem der Ansprüche 1 bis 7, dadurch gekennzeichnet, daß die Borsten aus einem korrosionsbeständigen Werkstoff, vorzugsweise einem Messing, bestehen.

9. Vorrichtung nach einem der Ansprüche 1 bis 8, dadurch gekennzeichnet, daß die zwischen den Bürstenscheiben (2, 3) bestehende kreiszylinderförmige Kammer (15) seitlich mit Spiel zu den Bürstenscheiben (2, 3) von einer kreishohlzylindrischen Innenwand (14; 83) umschlossen ist.

10. Vorrichtung nach Anspruch 9, gekennzeichnet durch eine vertikale Welle zum Antrieb der unteren Bürstenscheibe (2), wobei die obere Bürstenscheibe (3) drehfest und vertikal verschieblich sowie zum Zwecke von Aufgabe und Entnahme der Menge der Schalentiere nach oben herausnehmbar ist.

11. Vorrichtung nach Anspruch 9, dadurch gekennzeichnet, daß auch die Innenwand (8) mit Borsten besetzt ist.

12. Vorrichtung nach einem der Ansprüche 9 oder 11, dadurch gekennzeichnet, daß die drehantreibbare Bürstenscheibe (84) in Intervallen wechselnd links- und rechtsdrehend angetrieben ist.

13. Vorrichtung nach Anspruch 11, dadurch gekennzeichnet, daß die Innenwand von einem hohlzylinderförmigen, borstenbesetzten Einsatz gebildet ist.

14. Vorrichtung nach Anspruch 13, dadurch gekennzeichnet, daß der Einsatz geteilt ist und aus mehreren hohlzylinderausschnittförmigen Einsatzabschnitten (86) besteht.

15. Vorrichtung nach Anspruch 14, dadurch gekennzeichnet, daß die Trommelwand Rippen (87) zur Fixierung der Einsatzabschnitte (86) aufweist.

16. Vorrichtung nach Anspruch 15, dadurch gekennzeichnet, daß mindestens eine der Rippen (87) eine radial gerichtete Führungsnut (871) für eine an der abhebbaren Bürstenscheibe (85) angeordnete Drehsicherung (851) enthält.

17. Vorrichtung nach Anspruch 9, dadurch gekennzeichnet, daß der Antriebsmotor mittels Intervallschalter (89) wechselweise in beiden Drehrichtungen antreibbar ist.

18. Vorrichtung nach Anspruch 9, dadurch gekennzeichnet, daß die Drehzahl der angetriebenen Bürstenscheibe (2) 100 bis 300 n/min beträgt.

19. Vorrichtung nach Anspruch 1 oder 10, dadurch gekennzeichnet, daß die Aufgabeöffnung (50) für die Spülflüssigkeit in einer in die Kammer (15) gerichteten Strahldüse (52) besteht, und daß diese Strahldüse (52) der jeweiligen Bewegungsrichtung der angetriebenen Bürstenscheibe (2) entgegengerichtet ist.

20. Vorrichtung nach Anspruch 1, dadurch gekennzeichnet, daß dem Antriebsmotor (4) ein einstellbarer Zeitschalter zugeordnet ist.

**Revendications**

1. Appareil à nettoyer les crustacés, muni d'une chambre (15) destinée à recevoir une certaine quantité de crustacés qui seront aspergés avec un fluide de lavage, ladite chambre étant pourvue en bas d'une paroi (2) et en haut d'un disque (3), disposés l'un et l'autre pratiquement face à face et équipés d'éléments de contact agissant sur les crustacés pour leur nettoyage, lesdits éléments pouvant se déplacer les uns vers les autres en conservant le même plan et un moteur de commande (4) faisant tourner au moins le disque du haut (3), ce qui entraîne un mouvement relatif entre la paroi du bas et le disque du haut, caractérisé en ce que la paroi du bas est formée d'un disque monté avec un espacement par rapport à la paroi périphérique, que les éléments de contact sont constitués d'une multitude de poils répartis presque uniformément à la surface du disque (21, 22) de sorte qu'ils constituent avec chacun des deux disques un disque à brosse ou que l'un des disques forme un disque à brosse et que les éléments de contact de l'autre disque sont composés de doigts de caoutchouc, de doigts ou de palettes souples et que la paroi périphérique de la chambre comporte une ouverture de chargement (50) et une ouverture de sortie (55) pour le fluide de lavage, l'ouverture de sortie étant située au-dessous du disque du bas ou disque à brosse (2).

2. Appareil selon la revendication 1, caractérisé en ce qu'au lieu du disque à brosse du haut, c'est le disque à brosse du bas (2) qui est actionné, ou que les deux disques à brosse sont actionnés en même temps à une vitesse différente.

3. Appareil selon l'une des revendications 1 ou 2, caractérisé en ce que l'un des disques à brosse (3) peut se mouvoir verticalement et est poussé vers l'autre disque à brosse (2) par son propre poids ou grâce à une pression exercée sur lui.

4. Appareil selon l'une des revendications 1 à 3, caractérisé en ce qu'au moins l'un des disques à brosse (2, 3) comporte des sections munies en alternance de poils longs et courts.

5. Appareil selon la revendication 4, caractérisé en ce que la longeur des poils courts atteint 1 à 2 cm et que celle des poils longs dépasse de quelque 1 cm la longueur des poils courts.

6. Appareil selon l'une des revendications 4 ou 5, caractérisé en ce que les sections à poils courts (21) et les sections à poils longs (22) sont disposés en secteurs circulaires et en ont la forme.

7. Appareil selon l'une des revendications 4 à 6, caractérisé en ce qu'au moins l'un des disques à brosse (2, 3) présente sur son pourtour une section circulaire de poils plus longs que les autres.

8. Appareil selon l'une des revendications 1 à 7, caractérisé en ce que les poils sont fabriqués en un matériau non-corrosif, de préférence en cuivre.

9. Appareil selon l'une des revendications 1 à 8, caractérisé en ce que la chambre cylindrique circulaire (15) entre les disques à brosse est entourée latéralement d'une paroi intérieure cylindrique circulaire creuse (14, 83) conçue avec un espacement par rapport aux disques à brosse (2, 3).

10. Appareil selon la revendication 9, caractérisé en ce qu'il possède un arbre vertical actionnant le disque à brosse du bas (2), le disque à brosse du haut (3) n'étant pas rotatif, mais mobile verticalement et pouvant être retiré par le haut en vue du chargement et du déchargement des crustacés.

11. Appareil selon la revendication 9, caractérisé en ce que la paroi intérieure (8) est aussi pourvue de poils.

12. Appareil selon l'une des revendications 9 ou 11, caractérisé en ce que le disque à brosse rotatif (84) est actionné alternativement par rotation à gauche et par rotation à droite.

13. Appareil selon la revendication 11, caractérisé en ce que la paroi intérieure est formée par une garniture cylindrique creuse recouverte de poils.

14. Appareil selon la revendication 11, caractérisé en ce que la garniture intérieure est divisée et constituée de plusieurs sections intérieures ayant la forme de secteurs cylindriques creux (86).

15. Appareil selon la revendication 14, caractérisé en ce que la paroi du tambour présente des nervures (87) destinées à fixer les sections intérieures (86).

16. Appareil selon la revendication 15, caractérisée en ce qu'au moins l'une des nervures (87) comprend une rainure de guidage radiale (871) pour le dispositif d'arrêt (851) du disque à brosse amovible (85).

17. Appareil selon la revendication 9, caractérisé en ce que le moteur de commande peut être actionné alternativement dans les deux sens de rotation grâce à un interrupteur d'intervalle.

18. Appareil selon la revendication 9, caractérisé en ce que le nombre de tours du disque à brosse en marche (2) est de 100 à 300 par minute.

19. Appareil selon la revendication 1 ou 10, caractérisé en ce que l'ouverture de chargement pour le fluide de lavage consiste en un éjecteur (52) fixé dans la chambre (15) et que ledit éjecteur (52) est dirigé dans le sens inverse de celui dans lequel le disque à brosse tourne.

20. Appareil selon la revendication 1, caractérisé en ce que le moteur de commande (4) fonctionne avec un interrupteur à minuterie réglable.

## Claims

1. A device for cleaning shellfish, consisting of a chamber (15) designed to hold a certain quantity of shellfish to be moistened with a rinsing fluid; said chamber having a wall at the bottom (2) and a disk at the top (3), which are positioned essentially opposite to each other; said wall and disk being fitted with elements designed to penetrate into the shellfish and arranged in such a way that the planes of the disks can be moved towards each other, with at least the top disk (3) being rotated by a drive motor (4) in such a way that a relative movement results between the bottom wall and the top disk; characterized in that the bottom wall is a disk mounted clear of the peripheral chamber wall; that the penetrating elements are a multitude of bristles (21, 22), distributed more or less uniformly across the disk in such a way that in combination with each disk a brush disk is formed, or that one of the disks is such a brush disk and the penetrating elements on the other disk are rubber fingers, flexible fingers and/or flexible blades; and that the peripheral chamber wall contains a feedhole (50) and a discharge hole (55) for the rinsing fluid, the discharge hole being located below the bottom disk or brush disk (2).

2. A device according to claim 1, characterized in that the bottom brush disk (2) is driven instead of the top brush disk (3), or that both brush disks are driven at different speeds.

3. A device according to claim 1 or 2, characterized in that one of the brush disks (3) is freely movable in a vertical direction, being pushed towards the other brush disk (2) either by its own weight or by pressure being applied to it.

4. A device according to any of claims 1 to 3, characterized in that at least one of the brush disks (2, 3) has alternate sections (21, 31; 22, 32) covered with bristles of different lengths.

5. A device according to claim 1, characterized in that the length of the short bristles is 1 to 2 cm and the length of the long bristles exceeds that of the short bristles by about 1 cm.

6. A device according to claims 4 or 5, characterized in that the sections covered with short bristles (21) and the sections with long bristles (22) have the shape of and are arranged as sectors of a circle.

7. A device according to any of claims 4 to 6, characterized in that at least one of the brush disks (2, 3) has a ring of bristles along its periphery which are longer than the other bristles.

8. A device according to claims 1 to 7, characterized in that the bristles consist of anticorrosive material, preferably a type of brass.

9. A device according to claims 1 to 8, characterized in that the regular cylinder-shaped chamber (15) between the brush disks (2, 3) is enclosed laterally by a hollow-cylindrical interior wall (14; 83) mounted clear of the brush disks (2, 3).

10. A device according to claim 9, characterized in that there is a vertical shaft designed to drive the bottom brush disk (2); that the top brush disk (3) is not rotatable but movable in a vertical direction and detachable for the purpose of loading and discharging the quantity of shellfish.

11. A device according to claim 9, characterized in that the interior wall (8) is covered with bristles, too.

12. A device according to either claim 9 or 11, characterized in that the rotatable brush disk (84) is driven alternately in clockwise and counterclockwise directions.

13. A device according to claim 11, characterized in that the interior wall is an insert in the shape of a hollow cylinder covered with bristles.

14. A device according to claim 13, characterized in that the insert is divided up and consists of several insert sections shaped like hollow cylinder sections (86).

15. A device according to claim 14, characterized in that the wall of the drum is provided with ribs (87) designed to secure the insert sections (86) in place.

16. A device according to claim 15, characterized in that at least one of the ribs (87) has a slot (871) pointing in a radial direction to accommodate a stop pin (851) on the removable brush disk (85) designed to keep the brush disk from turning.

17. A device according to claim 9, characterized in that the drive motor can be turned alternately in either sense of rotation by means of an interval switch (89).

18. A device according to claim 9, characterized in that the powdered brush disk (2) is rotated at 100—300 n/min.

19. A device according to claim 1 or 10, characterized in that the feedhole (50) for the rinsing fluid is a jet nozzle (52) protruding into the chamber (15) and that said jet nozzle (52) points in the opposite direction to that in which the driven brush disk (2) is turning at any given time.

20. A device according to claim 1, characterized in that the drive motor (4) is controlled by means of an adjustable time switch.

*Fig. 1*

*Fig.2*

Fig.3